# EUROPEAN PATENT APPLICATION

(11) **EP 4 790 121 A1**
(43) Date of publication of application: **12.08.2026**
(21) Application number: 24874704.0
(22) Date of filing: 03.10.2024
(51) Int. Cl.: C10M 141/02, C09K 5/04, C10M 127/02, C10M 129/18, C10N 30/08, C10N 40/30

(54) **REFRIGERATOR OIL COMPOSITION AND MIXED COMPOSITION FOR REFRIGERATOR**

(30) Priority: 06.10.2023 JP 2023174344
(71) Applicant: Idemitsu Kosan Co.,Ltd., Tokyo 100-8321 (JP)
(72) Inventor: MATSUMOTO, Tomoya, Tokyo 100-8321 (JP)
(74) Representative: Hoffmann Eitle
(86) International application number: PCT/JP2024/035490
(87) International publication number: WO 2025/075104

(57) **Abstract**

Provided is a refrigerator oil composition to be used together with a refrigerant including an unsaturated fluorinated compound having a carbon-carbon unsaturated bond, the unsaturated fluorinated compound being represented by the following general formula (I):

C₂FₚR₄₋ₚ··· (I)

wherein, in the general formula (I), Rs each independently represent a hydrogen atom, a chlorine atom, a bromine atom, or an iodine atom, and "p" represents an integer of from 1 to 3, the refrigerator oil composition including: a base oil (A); an epoxy compound (B); and a terpene compound (C), wherein the epoxy compound (B) is an aliphatic epoxy compound (B1) or an alicyclic epoxy compound (B2), and wherein the total content of the epoxy compound (B) and the terpene compound (C) is 4.0 mass% or more with respect to the total amount of the refrigerator oil composition.

## Description

### Technical Field

The present invention relates to a refrigerator oil composition and a mixed composition for a refrigerator.

The term "mixed composition for a refrigerator" as used herein refers to a composition obtained by mixing a "refrigerant" and a "refrigerator oil composition."

### Background Art

A refrigerator such as a compression-type refrigerator generally has a structure, which includes at least a compressor, a condenser, an expansion mechanism (e.g., an expansion valve), and an evaporator, and in which a mixed composition for a refrigerator circulates in a closed system.

A fluorohydrocarbon compound having a low environmental load has started to be used as a refrigerant to be used in the refrigerator such as a compression-type refrigerator instead of a hydrochlorofluorocarbon (HCFC) that has heretofore been frequently used. Examples of the fluorohydrocarbon compound include saturated fluorohydrocarbon compounds (Hydro-Fluoro-Carbons; hereinafter also referred to as "HFCs"), such as 1,1,1,2-tetrafluoroethane (R134a), difluoromethane (R32), 1,1-difluoroethane (R152a), and a mixture of difluoromethane and pentafluoroethane (R410A).

In addition, the use of an unsaturated hydrofluorocarbon compound (Hydro-Fluoro-Olefin; hereinafter also referred to as "HFO"), which has a global warming potential (GWP) lower than that of a HFC, has been investigated. Heretofore, as the HFOs, propene-based HFOs, such as 1,3,3,3-tetrafluoropropene (R1234ze), 2,3,3,3-tetrafluoropropene (R1234yf), and 1,2,3,3-tetrafluoropropene (R1234ye), have been frequently investigated. In recent years, ethylene-based HFOs such as trans-1,2-difluoroethylene (R1132(E)), the ethylene-based HFOs each having a global warming potential (GWP) lower than those of the propene-based HFOs and each having a low boiling point, have started to be investigated (see, for example, Patent Literature 1).

### Citation List

### Patent Literature

PTL 1: JP 2014-211092 A

### Summary of Invention

### Technical Problem

In Patent Literature 1, polyol esters, polyvinyl ethers, alkylbenzenes, and the like have been listed as refrigerator oils used together with a refrigerant containing an ethylene-based HFO such as trans-1,2-difluoroethylene (R1132(E)). However, no investigation on heat stability or the like of such refrigerator oil has been made.

In addition, in recent years, refrigerators have been improved in performance and the like, and their operating conditions have become more severe than before. Accordingly, higher quality than ever before has been required for a refrigerator oil composition. The foregoing applies without exception even to a case in which an ethylene-based HFO such as trans-1,2-difluoroethylene (R1132(E)) is used as a refrigerant.

In view of the foregoing, an object of the present invention is to provide a refrigerator oil composition capable of exhibiting excellent heat stability even when a refrigerant containing an ethylene-based HFO is used.

### Solution to Problem

According to the present invention, the following items [1] to [3] are provided.
[1] A refrigerator oil composition to be used together with a refrigerant containing an unsaturated fluorinated compound having a carbon-carbon unsaturated bond, the unsaturated fluorinated compound being represented by the following general formula (I):

   C₂FₚR₄₋ₚ··· (I)

   wherein
   in the general formula (I), Rs each independently represent a hydrogen atom, a chlorine atom, a bromine atom, or an iodine atom, and "p" represents an integer of from 1 to 3,
   the refrigerator oil composition including: a base oil (A); an epoxy compound (B); and a terpene compound (C),
   wherein the epoxy compound (B) is an aliphatic epoxy compound (B1) or an alicyclic epoxy compound (B2), and
   wherein a total content of the epoxy compound (B) and the terpene compound (C) is 4.0 mass% or more with respect to a total amount of the refrigerator oil composition.
[2] A mixed composition for a refrigerator, including:
   a refrigerant containing an unsaturated fluorinated compound having a carbon-carbon unsaturated bond, the unsaturated fluorinated compound being represented by the following general formula (I):

      C₂FₚR₄₋ₚ··· (I)
   wherein
   in the general formula (I), Rs each independently represent a hydrogen atom, a chlorine atom, a bromine atom, or an iodine atom, and "p" represents an integer of from 1 to 3; and
   the refrigerator oil composition of any one of claims 1 to 8.
[3] A method of producing a refrigerator oil composition to be used together with a refrigerant containing an unsaturated fluorinated compound having a carbon-carbon unsaturated bond, the unsaturated fluorinated compound being represented by the following general formula (I):

   C₂FₚR₄₋ₚ··· (I)

   wherein
   in the general formula (I), Rs each independently represent a hydrogen atom, a chlorine atom, a bromine atom, or an iodine atom, and "p" represents an integer of from 1 to 3,
   the method including a step of mixing a base oil (A), an epoxy compound (B), and a terpene compound (C),
   wherein the epoxy compound (B) is an aliphatic epoxy compound (B1) or an alicyclic epoxy compound (B2), and
   wherein a total blending amount of the epoxy compound (B) and the terpene compound (C) is 4.0 mass% or more with respect to a total amount of the composition.

### Advantageous Effects of Invention

The present invention can provide the refrigerator oil composition capable of exhibiting excellent heat stability even when a refrigerant containing an ethylene-based HFO is used.

### Description of Embodiments

The upper limit values and lower limit values of numerical ranges described herein may be arbitrarily combined. For example, when the range of "from A to B" and the range of "from C to D" are described as numerical ranges, the numerical range of "from A to D" and the numerical range of "from C to B" are also included in the scope of the present invention.

In addition, the numerical range of "from a lower limit value to an upper limit value" described herein means that a physical property value is the lower limit value or more and the upper limit value or less unless otherwise stated.

In addition, in this description, the numerical values of Examples are numerical values that may each be used as an upper limit value or a lower limit value.

### [Aspect of Refrigerator Oil Composition according to Embodiment of the Present Invention]

A refrigerator oil composition according to an embodiment of the present invention includes a base oil (A), an epoxy compound (B), and a terpene compound (C).

The epoxy compound (B) is an aliphatic epoxy compound (B1) or an alicyclic epoxy compound (B2), and the total content of the epoxy compound (B) and the terpene compound (C) is 4.0 mass% or more with respect to the total amount of the refrigerator oil composition.

In addition, the refrigerator oil composition of this embodiment is used together with a refrigerant containing an unsaturated fluorinated compound having a carbon-carbon unsaturated bond, the compound being represented by the following general formula (I):

C₂FₚR₄₋ₚ··· (I)

wherein
in the general formula (I), Rs each independently represent a hydrogen atom, a chlorine atom, a bromine atom, or an iodine atom, and "p" represents an integer of from 1 to 3.

In the following description, the unsaturated fluorinated compound having a carbon-carbon unsaturated bond, the compound being represented by the general formula (I), is also referred to as "unsaturated fluorinated compound (I)."

The inventor of the present invention has made extensive investigations with a view to solving the above-mentioned problems.

In the course of the investigations, the inventor has found that it is more difficult to secure the heat stability of a refrigerator oil composition when the unsaturated fluorinated compound (I) is used as a refrigerant than when a propene-based HFO is used as a refrigerant. Accordingly, it has become extremely difficult to solve the above-mentioned problem.

In view of the foregoing, the inventor of the present invention has made various investigations, and as a result, has found that a refrigerator oil composition capable of exhibiting excellent heat stability even when used together with a refrigerant containing the unsaturated fluorinated compound (I) can be provided by: blending the base oil (A) with the aliphatic epoxy compound (B1) or the alicyclic epoxy compound (B2) serving as the epoxy compound (B), and with the terpene compound (C); and setting the total content of the epoxy compound (B) and the terpene compound (C) to 4.0 mass% or more with respect to the total amount of the composition.

In the following description, the "base oil (A)," the "epoxy compound (B)," the "aliphatic epoxy compound (B1)," the "alicyclic epoxy compound (B2)," and the "terpene compound (C)" are also referred to as "component (A)," "component (B)," "component (B1)," "component (B2)," and "component (C)," respectively.

Although the refrigerator oil composition of this embodiment may be formed of only the component (A), the component (B), and the component (C), the composition may further include any other component except the component (A), the component (B), and the component (C).

In the refrigerator oil composition of this embodiment, the total content of the component (A), the component (B), and the component (C) is preferably 50 mass% or more, more preferably 60 mass% or more, still more preferably 70 mass% or more, still further more preferably 80 mass% or more, yet still further more preferably 90 mass% or more, even more preferably 95 mass% or more with respect to the total amount of the refrigerator oil composition.

The respective components in the refrigerator oil composition of this embodiment are described in detail below.

### <Base Oil (A)>

The refrigerator oil composition of this embodiment includes the base oil (A).

In the refrigerator oil composition of this embodiment, from the viewpoint of long-term stability that the refrigerator oil composition is required to have, the content of the base oil (A) is preferably 75.0 mass% or more, more preferably 80.0 mass% or more, still more preferably 85.0 mass% or more with respect to the total amount of the refrigerator oil composition. In addition, from the viewpoint of easily securing the contents of the component (B) and the component (C) in the refrigerator oil composition, and the viewpoint of easily securing the content of an additive except the component (B) and the component (C), the content is preferably 96.0 mass% or less.

For example, one or more kinds selected from the group consisting of: a synthetic oil; and a mineral oil may each be used as the base oil (A).

From the viewpoint of improving the heat stability of the refrigerator oil composition, one or more kinds of base oils (hereinafter also referred to as "base oil (A1)") selected from the group consisting of: polyvinyl ethers (hereinafter also referred to as "PVEs"); polyalkylene glycols (hereinafter also referred to as "PAGs"); polyol esters (hereinafter also referred to as "POEs"); and mineral oils are each preferably incorporated as the base oil (A). From the viewpoint of more easily improving the heat stability of the refrigerator oil composition, one or more kinds of base oils (hereinafter also referred to as "base oil (A2)") selected from the group consisting of: the PVEs; and the PAGs are each more preferably incorporated. From the viewpoint of still more easily improving the heat stability of the refrigerator oil composition, the PVE (hereinafter also referred to as "base oil (A3)") is still more preferably incorporated.

The PVE, the PAG, the POE, and the mineral oil are described in detail below.

### (Polyvinyl Ether (PVE))

The PVE only needs to be a polymer having one or more kinds of vinyl ether-derived constituent units.

When the base oil (A) contains the PVE, the PVEs may be used alone or in combination thereof.

The PVE is preferably a polymer (A-1) having one or more kinds of constituent units each represented by the following general formula (A-1): 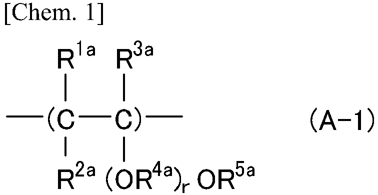 wherein
in the formula (A-1), R^{1a}, R^{2a}, and R^{3a} each independently represent a hydrogen atom or a hydrocarbon group having 1 to 8 carbon atoms, R^{4a} represents a divalent hydrocarbon group having 2 to 10 carbon atoms, R^{5a} represents a hydrocarbon group having 1 to 10 carbon atoms, and "r" represents the number of repeating units each represented by OR^{4a}, and represents a number of from 0 to 10, preferably a number of from 0 to 5, more preferably a number of from 0 to 3, still more preferably 0. When a plurality of OR^{4a}s are present in the constituent unit represented by the general formula (A-1), the plurality of OR^{4a}s may be identical to or different from each other.

Examples of the hydrocarbon group having 1 to 8 carbon atoms represented by each of R^{1a}, R^{2a}, and R^{3a} include: alkyl groups, such as a methyl group, an ethyl group, a n-propyl group, an isopropyl group, a n-butyl group, an isobutyl group, a sec-butyl group, a tert-butyl group, various pentyl groups, various hexyl groups, various heptyl groups, and various octyl groups; cycloalkyl groups, such as a cyclopentyl group, a cyclohexyl group, various methylcyclohexyl groups, various ethylcyclohexyl groups, and various dimethylcyclohexyl groups; aryl groups, such as a phenyl group, various methylphenyl groups, various ethylphenyl groups, and various dimethylphenyl groups; and arylalkyl groups, such as a benzyl group, various phenylethyl groups, and various methylbenzyl groups.

Herein, the term "various" refers to "linear, branched, or cyclic" hydrocarbon groups, and for example, the term "various butyl groups" refers to various butyl groups, such as "a n-butyl group, a sec-butyl group, an isobutyl group, a tert-butyl group, and a cyclobutyl group." In addition, the term "various" means that a group having a cyclic structure includes regioisomers, such as an ortho isomer, a meta isomer, and a para isomer. The same applies to the following.

The number of the carbon atoms of the hydrocarbon group represented by each of R^{1a}, R^{2a}, and R^{3a} is preferably from 1 to 6, more preferably from 1 to 3.

R^{1a}, R^{2a}, and R^{3a} each independently represent preferably a hydrogen atom or an alkyl group having 1 to 8 carbon atoms, more preferably a hydrogen atom or an alkyl group having 1 to 3 carbon atoms.

Examples of the divalent hydrocarbon group having 2 to 10 carbon atoms represented by R^{4a} include: divalent aliphatic groups, such as an ethylene group, a 1,2-propylene group, a 1,3-propylene group, various butylene groups, various pentylene groups, various hexylene groups, various heptylene groups, various octylene groups, various nonylene groups, and various decylene groups; divalent alicyclic groups, such as cyclohexane, methylcyclohexane, ethylcyclohexane, dimethylcyclohexane, and propylcyclohexane; divalent aromatic groups, such as various phenylene groups, various methylphenylene groups, various ethylphenylene groups, various dimethylphenylene groups, and various naphthylene groups; divalent alkyl aromatic groups each having a monovalent bonding site at each of the alkyl group moiety and aromatic moiety of an alkyl aromatic hydrocarbon, such as toluene, xylene, and ethylbenzene; and divalent alkyl aromatic groups each having bonding sites at the alkyl group moieties of a polyalkyl aromatic hydrocarbon, such as xylene and diethylbenzene.

The number of the carbon atoms of the hydrocarbon group represented by R^{4a} is preferably from 2 to 6, more preferably from 2 to 4.

R^{4a} preferably represents a divalent aliphatic group having 2 to 10 carbon atoms, more preferably a divalent aliphatic group having 2 to 4 carbon atoms.

Examples of the hydrocarbon group having 1 to 10 carbon atoms represented by R^{5a} include: alkyl groups, such as a methyl group, an ethyl group, a n-propyl group, an isopropyl group, a n-butyl group, an isobutyl group, a sec-butyl group, a tert-butyl group, various pentyl groups, various hexyl groups, various heptyl groups, various octyl groups, various nonyl groups, and various decyl groups; cycloalkyl groups, such as a cyclopentyl group, a cyclohexyl group, various methylcyclohexyl groups, various ethylcyclohexyl groups, various propylcyclohexyl groups, and various dimethylcyclohexyl groups; aryl groups, such as a phenyl group, various methylphenyl groups, various ethylphenyl groups, various dimethylphenyl groups, various propylphenyl groups, various trimethylphenyl groups, various butylphenyl groups, and various naphthyl groups; and arylalkyl groups, such as a benzyl group, various phenylethyl groups, various methylbenzyl groups, various phenylpropyl groups, and various phenylbutyl groups.

The number of the carbon atoms of the hydrocarbon group represented by R^{5a} is preferably from 1 to 8, more preferably from 1 to 6.

From the viewpoint of further improving the compatibility of the refrigerator oil composition with a refrigerant, R^{5a} represents preferably an alkyl group having 1 to 6 carbon atoms, more preferably an alkyl group having 1 to 4 carbon atoms.

The number (polymerization degree) of the constituent units each represented by the general formula (A-1) is appropriately selected in accordance with a kinematic viscosity that the base oil (A) is required to have.

In addition, the polymer having the constituent unit represented by the general formula (A-1) may be a homopolymer having only one kind of the constituent unit, or may be a copolymer having two or more kinds of the constituent units. When the polymer is a copolymer, the form of the copolymerization is not particularly limited, and may be any one of a block copolymer, a random copolymer, and a graft copolymer.

In addition, the PVE may include a polyalkylene glycol structure in its structure, but is preferably free of any polyalkylene glycol structure.

A monovalent group derived from, for example, a saturated hydrocarbon, an ether, an alcohol, a ketone, an amide, or a nitrile may be introduced into a terminal portion of the polymer (A-1). One terminal portion of the polymer (A-1) is preferably a group represented by the following general formula (A-1-i) among them: 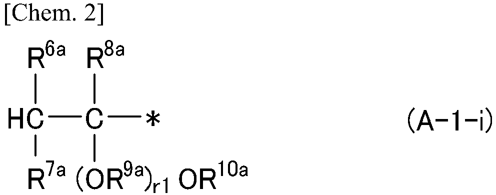 wherein
in the formula (A-1-i), * represents a bonding position with a carbon atom in the constituent unit represented by the general formula (A-1).

In the formula (A-1-i), R^{6a}, R^{7a}, and R^{8a} each independently represent a hydrogen atom or a hydrocarbon group having 1 to 8 carbon atoms, preferably a hydrogen atom or a hydrocarbon group having 1 to 6 carbon atoms, more preferably a hydrogen atom or an alkyl group having 1 to 3 carbon atoms.

Examples of the hydrocarbon group having 1 to 8 carbon atoms represented by each of R^{6a}, R^{7a}, and R^{8a} include the same groups as those listed as the examples of the hydrocarbon group having 1 to 8 carbon atoms represented by each of R^{1a}, R^{2a}, and R^{3a} in the general formula (A-1).

In the formula (A-1-i), R^{9a} represents a divalent hydrocarbon group having 2 to 10 carbon atoms, preferably a divalent hydrocarbon group having 2 to 6 carbon atoms, more preferably a divalent aliphatic group having 2 to 4 carbon atoms.

In the formula (A-1-i), r1 represents the number of repeating units each represented by OR^{9a}, and represents an integer of from 0 to 10, preferably an integer of from 0 to 5, more preferably an integer of from 0 to 3, still more preferably 0. When a plurality of OR^{9a}s are present in the constituent unit represented by the general formula (A-1-i), the plurality of OR^{9a}s may be identical to or different from each other.

Examples of the divalent hydrocarbon group having 2 to 10 carbon atoms represented by R^{9a} include the same groups as those listed as the examples of the divalent hydrocarbon group having 2 to 10 carbon atoms represented by R^{4a} in the general formula (A-1).

In the formula (A-1-i), R^{10a} represents a hydrocarbon group having 1 to 10 carbon atoms, preferably a hydrocarbon group having 1 to 8 carbon atoms, more preferably an alkyl group having 1 to 8 carbon atoms.

When r1 in the general formula (A-1-i) represents 0, R^{10a} preferably represents an alkyl group having 1 to 6 carbon atoms, and when r1 represents 1 or more, R^{10a} preferably represents an alkyl group having 1 to 4 carbon atoms.

Examples of the hydrocarbon group having 1 to 10 carbon atoms represented by R^{10a} include the same groups as those listed as the examples of the hydrocarbon group having 1 to 10 carbon atoms represented by R^{5a} in the general formula (A-1).

In addition, when one terminal portion of the polymer (A-1) is a group represented by the general formula (A-1-i), the other terminal portion thereof is preferably any one of a group represented by the general formula (A-1-i), a group represented by the following general formula (A-1-ii), a group represented by the following general formula (A-1-iii), and a group having an olefinically unsaturated bond: 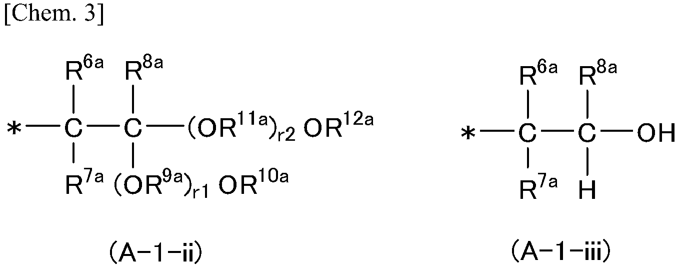 wherein
in the formulae (A-1-ii) and (A-1-iii), the definitions of R^{6a}, R^{7a}, R^{8a}, R^{9a}, R^{10a}, and r1 are the same as those in the general formula (A-1-i), and in the formula (A-1-ii), the definitions of R^{11a}, R^{12a}, and r2 are the same as those of R^{9a}, R^{10a}, and r1 in the general formula (A-1-i), respectively.

In this embodiment, a PVE having the constituent unit represented by the general formula (A-1) is preferably polyethyl vinyl ether, in which all of R^{1a}, R^{2a}, and R^{3a} represent hydrogen atoms, "r" represents 0, and R^{5a} represents an ethyl group, from the viewpoint of improving the solubility of the refrigerator oil composition in a refrigerant and the heat stability thereof.

In addition, from the same viewpoint, the PVE having the constituent unit represented by the general formula (A-1) is preferably a copolymer of polyethyl vinyl ether, in which all of R^{1a}, R^{2a}, and R^{3a} represent hydrogen atoms, "r" represents 0, and R^{5a} represents an ethyl group, and polyisobutyl vinyl ether, in which all of R^{1a}, R^{2a}, and R^{3a} represent hydrogen atoms, "r" represents 0, and R^{5a} represents an isobutyl group. In this case, the content ratio [(ethyl vinyl ether constituent unit)/(isobutyl vinyl ether constituent unit)] of an ethyl vinyl ether constituent unit to an isobutyl vinyl ether constituent unit is preferably from 50/50 to 99/1, more preferably from 70/30 to 99/1, still more preferably from 75/25 to 95/5, still further more preferably from 80/20 to 90/10 in terms of molar ratio.

### (Polyalkylene Glycol (PAG))

The PAG is preferably a polymer (A-2) represented by the following general formula (A-2).

R^{13a}-[(OR^{14a})ₘ-OR^{15a}]ₙ (A-2)

When the base oil (A) contains the PAG, the PAGs may be used alone or in combination thereof.

In the general formula (A-2), R^{13a} represents a hydrogen atom, a monovalent hydrocarbon group having 1 to 10 carbon atoms, an acyl group having 2 to 10 carbon atoms, a divalent to hexavalent hydrocarbon group having 1 to 10 carbon atoms, or a substituted or unsubstituted heterocyclic group having 3 to 10 ring-forming atoms, R^{14a} represents an alkylene group having 2 to 4 carbon atoms, and R^{15a} represents a hydrogen atom, a monovalent hydrocarbon group having 1 to 10 carbon atoms, an acyl group having 2 to 10 carbon atoms, or a substituted or unsubstituted heterocyclic group having 3 to 10 ring-forming atoms.

Examples of the substituent that the heterocyclic group may have include: an alkyl group having 1 to 10 (preferably 1 to 6, more preferably 1 to 3) carbon atoms; a cycloalkyl group having 3 to 10 (preferably 3 to 8, more preferably 5 or 6) ring-forming carbon atoms; an aryl group having 6 to 18 (preferably 6 to 12) ring-forming carbon atoms; a halogen atom (a fluorine atom, a chlorine atom, a bromine atom, or an iodine atom); a cyano group; a nitro group; a hydroxy group; and an amino group.

Those substituents may each be further substituted with any one of the above-mentioned substituents.

"n" represents an integer of from 1 to 6, preferably an integer of from 1 to 3, more preferably 1.

"n" is determined in accordance with the number of the bonding sites of R^{13a} in the general formula (A-2). For example, when R^{13a} represents an alkyl group or an acyl group, "n" represents 1, and when R^{13a} represents a hydrocarbon group or a heterocyclic group, and the valence of the group is divalent, trivalent, tetravalent, pentavalent, or hexavalent, "n" represents 2, 3, 4, 5, or 6, respectively.

"m" represents the number of repeating units each represented by OR^{14a}, and represents a number of 1 or more, preferably such a number that m×n becomes from 6 to 80. The value of "m" is a value appropriately set so that the kinematic viscosity of the base oil (A) at 100°C may fall within the range of from 2 mm²/s to 50 mm²/s, and the value is not particularly limited as long as the kinematic viscosity is adjusted so as to fall within the predetermined range.

A plurality of R^{14a}s may be identical to or different from each other. In addition, when "n" represents 2 or more, a plurality of R^{15a}s in one molecule of the PAG may be identical to or different from each other.

Examples of the above-mentioned monovalent hydrocarbon group represented by each of R^{13a} and R^{15a} include: alkyl groups, such as a methyl group, an ethyl group, a n-propyl group, an isopropyl group, a n-butyl group, an isobutyl group, a sec-butyl group, a tert-butyl group, various pentyl groups, various hexyl groups, various heptyl groups, various octyl groups, various nonyl groups, and various decyl groups; cycloalkyl groups, such as a cyclopentyl group, a cyclohexyl group, various methylcyclohexyl groups, various ethylcyclohexyl groups, various propylcyclohexyl groups, and various dimethylcyclohexyl groups; aryl groups, such as a phenyl group, various methylphenyl groups, various ethylphenyl groups, various dimethylphenyl groups, various propylphenyl groups, various trimethylphenyl groups, various butylphenyl groups, and various naphthyl groups; and arylalkyl groups, such as a benzyl group, various phenylethyl groups, various methylbenzyl groups, various phenylpropyl groups, and various phenylbutyl groups. The above-mentioned alkyl group may be linear or branched.

From the viewpoint of the compatibility of the refrigerator oil composition with a refrigerant, the number of the carbon atoms of the monovalent hydrocarbon group represented by each of R^{13a} and R^{15a} is preferably from 1 to 10, more preferably from 1 to 6, still more preferably from 1 to 3.

The hydrocarbon group moiety of the above-mentioned acyl group having 2 to 10 carbon atoms represented by each of R^{13a} and R^{15a} may be linear, branched, or cyclic. Examples of the alkyl group moiety include hydrocarbon groups each having 1 to 9 carbon atoms among the hydrocarbon groups represented by R^{13a} and R^{15a} described above.

From the viewpoint of the compatibility of the refrigerator oil composition with a refrigerant, the number of the carbon atoms of the acyl group represented by each of R^{13a} and R^{15a} is preferably from 2 to 8, more preferably from 2 to 6.

Examples of the above-mentioned divalent to hexavalent hydrocarbon group represented by R^{13a} include residual groups each obtained by further removing 1 to 5 hydrogen atoms from the above-mentioned monovalent hydrocarbon group represented by R^{13a}, and residual groups each obtained by removing a hydroxy group from a polyhydric alcohol, such as trimethylolpropane, glycerin, pentaerythritol, sorbitol, 1,2,3-trihydroxycyclohexane, or 1,3,5-trihydroxycyclohexane.

From the viewpoint of the compatibility of the refrigerator oil composition with a refrigerant, the number of the carbon atoms of the divalent to hexavalent acyl group represented by R^{13a} is preferably from 2 to 10, more preferably from 2 to 6.

The above-mentioned heterocyclic group represented by each of R^{13a} and R^{15a} is preferably an oxygen atom-containing heterocyclic group or a sulfur atom-containing heterocyclic group. The heterocyclic group may be a saturated ring or an unsaturated ring.

Examples of the above-mentioned oxygen atom-containing heterocyclic group include residual groups obtained by removing one to six of the hydrogen atoms of oxygen atom-containing saturated heterocycles, such as ethylene oxide, 1,3-propylene oxide, tetrahydrofuran, tetrahydropyran, and hexamethylene oxide, and oxygen atom-containing unsaturated heterocycles, such as acetylene oxide, furan, pyran, oxycycloheptatriene, isobenzofuran, and isochromene.

In addition, examples of the above-mentioned sulfur atom-containing heterocyclic group include residual groups obtained by removing one to six of the hydrogen atoms of sulfur atom-containing saturated heterocycles, such as ethylene sulfide, trimethylene sulfide, tetrahydrothiophene, tetrahydrothiopyran, and hexamethylene sulfide, and sulfur atom-containing unsaturated heterocycles, such as acetylene sulfide, thiophene, thiapyran, and thiotripyridene.

The above-mentioned heterocyclic group represented by each of R^{13a} and R^{15a} may have a substituent, and the substituent may be bonded to an oxygen atom in the general formula (A-2). Although the substituent is as described above, the substituent is preferably an alkyl group having 1 to 6 carbon atoms, more preferably an alkyl group having 1 to 3 carbon atoms.

From the viewpoint of the compatibility with the refrigerant, the number of the ring-forming atoms of the above-mentioned heterocyclic group is preferably from 3 to 10, more preferably from 3 to 6.

Examples of the above-mentioned alkylene group represented by R^{14a} include: alkylene groups each having 2 carbon atoms, such as a dimethylene group (-CH₂CH₂-) and an ethylene group (-CH(CH₃)-); alkylene groups each having 3 carbon atoms, such as a trimethylene group (-CH₂CH₂CH₂-), a propylene group (-CH(CH₃)CH₂-), a propylidene group (-CHCH₂CH₃-), and an isopropylidene group (-C(CH₃)₂-); and alkylene groups each having 4 carbon atoms, such as a tetramethylene group (-CH₂CH₂CH₂CH₂-), a 1-methyltrimethylene group (-CH(CH₃)CH₂CH₂-), a 2-methyltrimethylene group (-CH₂CH(CH₃)CH₂-), and a butylene group (-C(CH₃)₂CH₂-). R1^{4a} preferably represents a propylene group (-CH(CH₃)CH₂-) among them.

In the polymer (A-2) represented by the general formula (A-2), the content of the oxypropylene unit (-OCH(CH₃)CH₂-) is preferably 50 mol% or more, more preferably 65 mol% or more, still more preferably 80 mol% or more with respect to the total content (100 mol%) of the oxyalkylene (OR^{14a}) in the polymer (A-2).

Among the polymers (A-2) each represented by the general formula (A-2), one or more kinds selected from the group consisting of: a polyoxypropylene glycol dimethyl ether represented by the following general formula (A-2-i); a polyoxyethylene polyoxypropylene glycol dimethyl ether represented by the following general formula (A-2-ii); a polyoxypropylene glycol monobutyl ether represented by the following general formula (A-2-iii); and polyoxypropylene glycol diacetate are preferred. 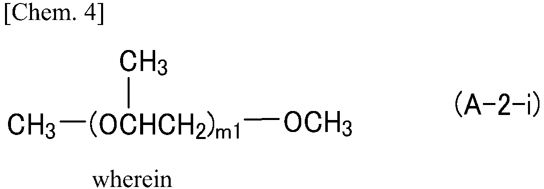 in the formula (A-2-i), m1 represents a number of 1 or more, preferably a number of from 6 to 80. 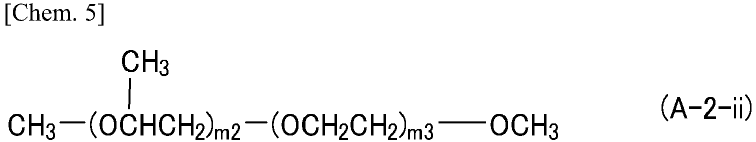 wherein
in the formula (A-2-ii), m2 and m3 each independently represent a number of 1 or more, preferably such a number that the value of m2+m3 becomes from 6 to 80. 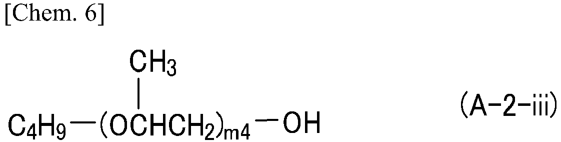 wherein
in the formula (A-2-iii), m4 represents a number of 1 or more, preferably a number of from 6 to 80.

m1 in the general formula (A-2-i), m2 and m3 in the general formula (A-2-ii), and m4 in the general formula (A-2-iii) only need to be appropriately selected in accordance with the kinematic viscosity that the base oil (A) is required to have.

### (Polyol Ester (POE))

The POE is, for example, an ester of a diol or a polyol and a fatty acid. When the base oil (A) contains the POE, the POEs may be used alone or in combination thereof.

The POE is preferably an ester of a diol or a polyol having 3 to 20 hydroxy groups and a fatty acid having 3 to 20 carbon atoms.

Examples of the diol include ethylene glycol, 1,3-propanediol, propylene glycol, 1,4-butanediol, 1,2-butanediol, 2-methyl-1,3-propanediol, 1,5-pentanediol, neopentyl glycol, 1,6-hexanediol, 2-ethyl-2-methyl-1,3-propanediol, 1,7-heptanediol, 2-methyl-2-propyl-1,3-propanediol, 2,2-diethyl-1,3-propanediol, 1,8-octanediol, 1,9-nonanediol, 1,10-decanediol, 1,11-undecanediol, and 1,12-dodecanediol.

Examples of the polyol include: polyhydric alcohols, such as trimethylolethane, trimethylolpropane, trimethylolbutane, di-(trimethylolpropane), tri-(trimethylolpropane), pentaerythritol, di-(pentaerythritol), tri-(pentaerythritol), glycerin, polyglycerins (dimer to icosamer of glycerin), 1,3,5-pentanetriol, sorbitol, sorbitan, a sorbitol glycerin condensate, adonitol, arabitol, xylitol, and mannitol; sugars, such as xylose, arabinose, ribose, rhamnose, glucose, fructose, galactose, mannose, sorbose, cellobiose, maltose, isomaltose, trehalose, sucrose, raffinose, gentianose, and melezitose; and partially etherified products thereof and methylglucoside (glycoside).

Among them, hindered alcohols, such as neopentyl glycol, trimethylolethane, trimethylolpropane, trimethylolbutane, di-(trimethylolpropane), tri-(trimethylolpropane), pentaerythritol, di-(pentaerythritol), and tri-(pentaerythritol), are preferred. The term "hindered alcohol" means an alcohol having a quaternary carbon atom bonded to four carbon atoms.

The number of the carbon atoms of the fatty acid is preferably 3 or more, more preferably 4 or more, still more preferably 5 or more, still further more preferably 8 or more from the viewpoint of the lubrication performance of the refrigerator oil composition, and is preferably 20 or less, more preferably 16 or less, still more preferably 12 or less, still further more preferably 10 or less from the viewpoint of the compatibility with the refrigerant.

The number of the carbon atoms of the above-mentioned fatty acid includes the carbon atom of the carboxy group (-COOH) of the fatty acid.

In addition, although the fatty acid may be any one of a linear fatty acid and a branched fatty acid, the acid is preferably a linear fatty acid from the viewpoint of the lubrication performance, and is preferably a branched fatty acid from the viewpoint of the hydrolysis stability thereof. Further, the fatty acid may be any one of a saturated fatty acid and an unsaturated fatty acid.

Examples of the fatty acid include: linear or branched fatty acids, such as isobutyric acid, propionic acid, butanoic acid, pentanoic acid, hexanoic acid, heptanoic acid, octanoic acid, nonanoic acid, decanoic acid, undecanoic acid, dodecanoic acid, tridecanoic acid, tetradecanoic acid, pentadecanoic acid, hexadecanoic acid, heptadecanoic acid, octadecanoic acid, nonadecanoic acid, icosanoic acid, and oleic acid; and so-called neo acids each having a quaternary α-carbon atom.

More specifically, for example, isobutyric acid, valeric acid (n-pentanoic acid), caproic acid (n-hexanoic acid), enanthic acid (n-heptanoic acid), caprylic acid (n-octanoic acid), pelargonic acid (n-nonanoic acid), capric acid (n-decanoic acid), oleic acid (cis-9-octadecenoic acid), isopentanoic acid (3-methylbutanoic acid), 2-methylhexanoic acid, 2-ethylpentanoic acid, 2-ethylhexanoic acid, and 3,5,5-trimethylhexanoic acid are preferred.

The POE may be a partial ester in which part of a plurality of hydroxy groups of the polyol remains unesterified, or may be a complete ester in which all the hydroxy groups are esterified. In addition, the POE may be a mixture of a partial ester and a complete ester, but is preferably a complete ester.

The POE is preferably an ester of a hindered alcohol, such as neopentyl glycol, trimethylolethane, trimethylolpropane, trimethylolbutane, di-(trimethylolpropane), tri-(trimethylolpropane), pentaerythritol, di-(pentaerythritol), or tri-(pentaerythritol), more preferably an ester of neopentyl glycol, trimethylolethane, trimethylolpropane, trimethylolbutane, or pentaerythritol from the viewpoint that the refrigerator oil composition is more excellent in hydrolysis stability. Further, the POE is still more preferably an ester of pentaerythritol from the viewpoint that the refrigerator oil composition is particularly excellent in compatibility with the refrigerant and hydrolysis stability.

Preferred specific examples of the POE include: a diester of neopentyl glycol and one kind or two or more kinds of fatty acids selected from the group consisting of: isobutyric acid; valeric acid; caproic acid; enanthic acid; caprylic acid; pelargonic acid; capric acid; oleic acid; isopentanoic acid; 2-methylhexanoic acid; 2-ethylpentanoic acid; 2-ethylhexanoic acid; and 3,5,5-trimethylhexanoic acid; a triester of trimethylolethane and one kind or two or more kinds of fatty acids selected from the group consisting of: isobutyric acid; valeric acid; caproic acid; enanthic acid; caprylic acid; pelargonic acid; capric acid; oleic acid; isopentanoic acid; 2-methylhexanoic acid; 2-ethylpentanoic acid; 2-ethylhexanoic acid; and 3,5,5-trimethylhexanoic acid; a triester of trimethylolpropane and one kind or two or more kinds of fatty acids selected from the group consisting of: isobutyric acid; valeric acid; caproic acid; enanthic acid; caprylic acid; pelargonic acid; capric acid; oleic acid; isopentanoic acid; 2-methylhexanoic acid; 2-ethylpentanoic acid; 2-ethylhexanoic acid; and 3,5,5-trimethylhexanoic acid; a triester of trimethylolbutane and one kind or two or more kinds of fatty acids selected from the group consisting of: isobutyric acid; valeric acid; caproic acid; enanthic acid; caprylic acid; pelargonic acid; capric acid; oleic acid; isopentanoic acid; 2-methylhexanoic acid; 2-ethylpentanoic acid; 2-ethylhexanoic acid; and 3,5,5-trimethylhexanoic acid; and a tetraester of pentaerythritol and one kind or two or more kinds of fatty acids selected from the group consisting of: isobutyric acid; valeric acid; caproic acid; enanthic acid; caprylic acid; pelargonic acid; capric acid; oleic acid; isopentanoic acid; 2-methylhexanoic acid; 2-ethylpentanoic acid; 2-ethylhexanoic acid; and 3,5,5-trimethylhexanoic acid.

The ester of a polyol and two or more kinds of fatty acids may be an ester obtained by mixing two or more kinds of esters of one kind of fatty acid and a polyol. Among the POEs, an ester of two or more kinds of mixed fatty acids and a polyol is preferred from the viewpoints of an improvement in low temperature characteristic and the compatibility with the refrigerant.

### (Mineral Oil)

Examples of the mineral oil include: a refined oil obtained by subjecting a lubricating oil fraction obtained by distilling a normal-pressure residual oil, which is obtained by distilling a paraffin base, intermediate base, or naphthene base crude oil under normal pressure or by distilling a crude oil under normal pressure, under reduced pressure to one or more kinds of treatment among solvent deasphalting, solvent extraction, hydrocracking, solvent dewaxing, catalytic dewaxing, and hydrorefining; and an oil produced by isomerizing a mineral-based wax.

When the base oil (A) contains the mineral oil, the mineral oils may be used alone or in combination thereof.

### (Preferred Aspect of Base Oil (A))

In the refrigerator oil composition of this embodiment, the main component of the base oil (A) is preferably the above-mentioned base oil (A1), more preferably the above-mentioned base oil (A2), still more preferably the above-mentioned base oil (A3). The term "main component" as used herein means a component whose content is largest.

The content of the base oil (A1), the base oil (A2), or the base oil (A3) in the base oil (A) is preferably from 50 mass% to 100 mass%, more preferably from 60 mass% to 100 mass%, still more preferably from 70 mass% to 100 mass%, still further more preferably from 80 mass% to 100 mass%, yet still further more preferably from 90 mass% to 100 mass% with respect to the total amount (100 mass%) of the base oil (A).

In particular, the content of the base oil (A3) (that is, PVE) in the base oil (A) is preferably from 50 mass% to 100 mass%, more preferably from 60 mass% to 100 mass%, still more preferably from 70 mass% to 100 mass%, still further more preferably from 80 mass% to 100 mass%, yet still further more preferably from 90 mass% to 100 mass%, even more preferably from 95 mass% to 100 mass%.

### (Other Base Oil)

The base oil (A) may further contain any other base oil in addition to the base oil (A1), the base oil (A2), or the base oil (A3).

The other base oil is, for example, a synthetic oil that does not correspond to the PVE, the PAG, the POE, and the mineral oil described above, such as a polyester, a polycarbonate, a hydrogenated product of an α-olefin oligomer, an alicyclic hydrocarbon compound, an alkylated aromatic hydrocarbon compound, or a copolymer (ECP) of a poly(oxy)alkylene glycol or a monoether thereof and a polyvinyl ether.

The term "copolymer (ECP) of a poly(oxy)alkylene glycol or a monoether thereof and a polyvinyl ether" means a copolymer having a constituent unit derived from the poly(oxy)alkylene glycol or the monoether thereof and a constituent unit derived from the polyvinyl ether, and the term "poly(oxy)alkylene glycol" refers to both of a polyalkylene glycol and a polyoxyalkylene glycol.

From the viewpoint of, for example, improving the lubrication performance and sealing properties of the refrigerator oil composition, the 40°C kinematic viscosity of the base oil (A) is preferably 20 mm²/s or more, more preferably 25 mm²/s or more, still more preferably 30 mm²/s or more. In addition, from the viewpoint of improving the energy saving properties of the refrigerator oil composition, the 40°C kinematic viscosity is preferably 150 mm²/s or less, more preferably 100 mm²/s or less, still more preferably 80 mm²/s or less.

The upper limit values and lower limit values of those numerical ranges may be arbitrarily combined. Specifically, the 40°C kinematic viscosity is preferably from 20 mm²/s to 150 mm²/s, more preferably from 25 mm²/s to 100 mm²/s, still more preferably from 30 mm²/s to 80 mm²/s.

In this description, the 40°C kinematic viscosity of the base oil (A) is a value measured in accordance with JIS K2283:2000.

### <Epoxy Compound (B)>

The refrigerator oil composition of this embodiment includes the epoxy compound (B).

The refrigerator oil composition of this embodiment includes the terpene compound (C) together with the epoxy compound (B), and hence exhibits excellent heat stability.

The epoxy compound (B) is, for example, the aliphatic epoxy compound (B1) or the alicyclic epoxy compound (B2).

The aliphatic epoxy compound (B1) and the alicyclic epoxy compound (B2) are described in detail below.

### (Aliphatic Epoxy Compound (B1))

The aliphatic epoxy compound (B1) is a compound having an aliphatic hydrocarbon group and one or more epoxy groups in a molecule thereof, and examples thereof may include: compounds each having a glycidyl ether group, such as alkyl glycidyl ethers and alkylene glycol glycidyl ethers; alkyl epoxides; and epoxidized soybean oil.

The aliphatic epoxy compounds (B1) may be used alone or in combination thereof.

Herein, from the viewpoint of easily making the heat stability of the refrigerator oil composition more excellent, the aliphatic epoxy compound (B1) preferably includes a compound having a glycidyl ether group (hereinafter also simply referred to as "glycidyl ether compound").

The content of the glycidyl ether compound is preferably from 50 mass% to 100 mass%, more preferably from 60 mass% to 100 mass%, still more preferably from 70 mass% to 100 mass%, still further more preferably from 80 mass% to 100 mass%, yet still further more preferably from 90 mass% to 100 mass%, even more preferably from 95 mass% to 100 mass% with respect to the total amount of the aliphatic epoxy compound (B1).

Examples of the glycidyl ether compound include glycidyl ethers derived from saturated or unsaturated aliphatic monoalcohols or aliphatic polyhydric alcohols each having preferably 4 to 30, more preferably 4 to 24, still more preferably 5 to 20 carbon atoms. The aliphatic monoalcohols or the aliphatic polyhydric alcohols may each have a linear structure, or may each have a branched chain.

In the case of a glycidyl ether derived from an aliphatic polyhydric alcohol, from the viewpoint of the stability of the refrigerator oil composition and the viewpoint of suppressing an increase in hydroxyl value thereof, all the hydroxy groups of the glycidyl ether are preferably glycidyl etherified.

Among them, in particular, a glycidyl ether derived from a linear or branched saturated aliphatic monohydric alcohol having 5 to 20 carbon atoms is more preferred as the glycidyl ether compound.

In the foregoing description, the number of the carbon atoms of the glycidyl ether compound is the number of the carbon atoms of the entire glycidyl ether compound including the number of the carbon atoms (number of carbon atoms: 3) of a glycidyl ether group.

Herein, the glycidyl ether compound is more preferably, for example, a glycidyl ether compound represented by the following general formula (b1): 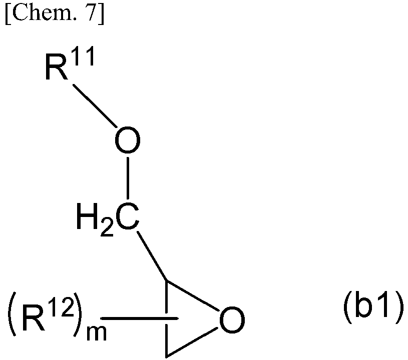 wherein
in the general formula (b1), R¹¹ represents a saturated aliphatic hydrocarbon group having 1 to 27 carbon atoms. From the viewpoint of easily making the heat stability of the refrigerator oil composition more excellent, the number of the carbon atoms of the saturated aliphatic hydrocarbon group is preferably from 4 to 24, more preferably from 6 to 20, still more preferably from 6 to 16.

R¹² represents a saturated aliphatic hydrocarbon group having 1 to 30 carbon atoms.

"m" represents an integer of from 0 to 3, and from the viewpoint of easily making the heat stability of the refrigerator oil composition more excellent, "m" represents an integer of preferably from 0 to 2, more preferably 0 or 1, still more preferably 0. When "m" represents 2 or more and a plurality of R¹²s are present, the respective R¹²s may be identical to or different from each other.

Herein, from the viewpoint of easily making the heat stability of the refrigerator oil composition more excellent, in the general formula (b1), R¹¹ preferably represents a branched alkyl group.

Examples of the glycidyl ether compound include 2-ethylethyl glycidyl ether, 2-methylhexyl glycidyl ether, 2-ethylhexyl glycidyl ether, 2-propylhexyl glycidyl ether, 3-methylhexyl glycidyl ether, 3-ethylhexyl glycidyl ether, 3-propylhexyl glycidyl ether, isononyl glycidyl ether, caprinoyl glycidyl ether, lauryl glycidyl ether, and myristyl glycidyl ether. Among them, 2-ethylhexyl glycidyl ether is preferred.

The glycidyl ether compounds each represented by the general formula (b1) may be used alone or in combination thereof.

### (Alicyclic Epoxy Compound (B2))

The alicyclic epoxy compound (B2) is a compound having an alicyclic hydrocarbon group and one or more epoxy groups in a molecule thereof, and is preferably, for example, a compound represented by the following general formula (b2): 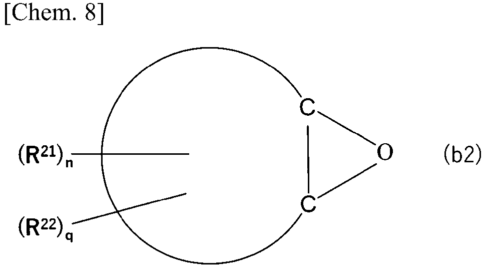 wherein
in the general formula (b2), an alicyclic ring represented in a substantially circular shape is a cycloalkane skeleton having 5 to 12 ring-forming carbon atoms or a cycloalkene skeleton having 5 to 12 ring-forming carbon atoms.

Herein, from the viewpoint of easily making the heat stability of the refrigerator oil composition more excellent, the alicyclic ring is preferably a cycloalkane skeleton having 5 to 10 ring-forming carbon atoms or a cycloalkene skeleton having 5 to 10 ring-forming carbon atoms, more preferably a cycloalkane skeleton having 5 to 8 ring-forming carbon atoms or a cycloalkene skeleton having 5 to 8 ring-forming carbon atoms, still more preferably a cyclohexane skeleton or a cyclohexene skeleton, still further more preferably a cyclohexane skeleton.

That is, the alicyclic epoxy compound (B2) preferably includes a compound having a cyclohexane skeleton.

The content of the compound having a cyclohexane skeleton is preferably from 50 mass% to 100 mass%, more preferably from 60 mass% to 100 mass%, still more preferably from 70 mass% to 100 mass%, still further more preferably from 80 mass% to 100 mass%, yet still further more preferably from 90 mass% to 100 mass%, even more preferably from 95 mass% to 100 mass% with respect to the total amount of the alicyclic epoxy compound (B2).

In the general formula (b2), R²¹ represents an aliphatic hydrocarbon group having a linear or branched olefin structure having 2 to 10 carbon atoms, and examples thereof include a vinyl group, an allyl group, a butenyl group, a pentenyl group, a hexenyl group, a heptenyl group, a 1-methyl-2-butenyl group, a 1-methyl-3-butenyl group, a 1,2-dimethyl-3-pentenyl group, and a 1,2-dimethyl-4-pentenyl group.

The aliphatic hydrocarbon group may have one or more ether bonds, but is preferably an aliphatic hydrocarbon group having no ether bond.

In addition, the aliphatic hydrocarbon group may be an aliphatic hydrocarbon group having a substituent or an aliphatic hydrocarbon group having no substituent, but is preferably an aliphatic hydrocarbon group having no substituent. When the aliphatic hydrocarbon group has a substituent, examples of the substituent include a halogen atom, a hydroxy group, an alkoxy group, an amino group, an imino group, an amide group, and a carboxyl group. When the aliphatic hydrocarbon group has the plurality of substituents, the plurality of substituents may be identical to or different from each other.

In the general formula (b2), "n" represents 0 or 1.

Herein, in the general formula (b2), when "n" represents 1, from the viewpoint of easily making the heat stability of the refrigerator oil composition more excellent, R²¹ represents preferably an aliphatic hydrocarbon group having a linear olefin structure, more preferably an aliphatic hydrocarbon group having a linear α-olefin structure.

In addition, in the general formula (b2), when "n" represents 1, from the viewpoint of easily making the heat stability of the refrigerator oil composition further excellent, the number of the carbon atoms of R²¹ is preferably from 2 to 6, more preferably 2 or 3.

Accordingly, in the general formula (b2), when "n" represents 1, R²¹ represents, for example, a vinyl group, an allyl group, a 3-butenyl group, a 4-pentenyl group, or a 5-hexenyl group, preferably a vinyl group or an allyl group, more preferably a vinyl group.

In addition, when the alicyclic ring is a cyclohexane ring (i.e., when a skeleton containing an epoxy group is a 1,2-epoxycyclohexane skeleton), R²¹ is preferably bonded to the 4-position of the cyclohexane ring.

In the general formula (b2), R²² represents a substituent except the R²¹ group in the alicyclic ring. Examples of the substituent include an alkyl group having 1 to 3 carbon atoms, a halogen atom, a hydroxy group, an alkoxy group, an amino group, an imino group, an amide group, and a carboxyl group.

In addition, "q" represents an integer of 0 or more. When "q" represents 2 or more, a plurality of R²²s may be identical to or different from each other.

Herein, from the viewpoint of easily making the heat stability of the refrigerator oil composition more excellent, "q" preferably represents 0.

1,2-Epoxy-4-vinylcyclohexane is preferred as the compound having a cyclohexane skeleton.

The compounds each having a cyclohexane skeleton may be used alone or in combination thereof.

### <Terpene Compound (C)>

The refrigerator oil composition of this embodiment includes the terpene compound (C).

The refrigerator oil composition of this embodiment includes the epoxy compound (B) together with the terpene compound (C), and hence exhibits excellent heat stability.

The terpene compound (C) is preferably, for example, a monoterpene compound. Examples of the monoterpene compound include: pinene compounds, such as α-pinene and β-pinene; terpinene-based compounds, such as α-terpinene and γ-terpinene; monocyclic monoterpene compounds, such as d-limonene and l-limonene; and limonene oxide.

The refrigerator oil composition preferably includes, as the terpene compound (C), one or more kinds selected from the group consisting of: a pinene compound; and a terpinene compound among them, and more preferably includes one or more kinds selected from the group consisting of: β-pinene; and γ-terpinene.

The content of the one or more kinds selected from the group consisting of: a pinene compound; and a terpinene compound (preferably one or more kinds selected from the group consisting of: β-pinene; and γ-terpinene) is preferably from 50 mass% to 100 mass%, more preferably from 60 mass% to 100 mass%, still more preferably from 70 mass% to 100 mass%, still further more preferably from 80 mass% to 100 mass%, yet still further more preferably from 90 mass% to 100 mass%, even more preferably from 95 mass% to 100 mass% with respect to the total amount of the terpene compound (C).

The terpene compounds (C) may be used alone or in combination thereof.

### <Total Content of Component (B) and Component (C)>

In the refrigerator oil composition of this embodiment, the total content of the epoxy compound (B1) and the terpene compound (C) needs to be 4.0 mass% or more with respect to the total amount of the refrigerator oil composition.

When the total content of the epoxy compound (B) and the terpene compound (C) is 4.0 mass% or more, the heat stability of the refrigerator oil composition can be made excellent.

Herein, from the viewpoint of easily making the heat stability of the refrigerator oil composition more excellent with an appropriate addition amount, the total content of the epoxy compound (B) and the terpene compound (C) is preferably 5.0 mass% or more, more preferably 6.0 mass% or more, still more preferably 7.0 mass% or more, still further more preferably 8.0 mass% or more, yet still further more preferably 9.0 mass% or more with respect to the total amount of the refrigerator oil composition.

In addition, from the viewpoint of easily securing the heat stability of the refrigerator oil composition with an appropriate addition amount, the total content is preferably 20 mass% or less, more preferably 18 mass% or less, still more preferably 17 mass% or less, still further more preferably 16 mass% or less, yet still further more preferably 15 mass% or less.

The upper limit values and lower limit values of those numerical ranges may be arbitrarily combined. Specifically, the total content is preferably from 5.0 mass% to 20 mass%, more preferably from 6.0 mass% to 18 mass%, still more preferably from 7.0 mass% to 17 mass%, still further more preferably from 8.0 mass% to 16 mass%, yet still further more preferably from 9.0 mass% to 15 mass%.

### <Content of Component (B)>

From the viewpoint of easily making the heat stability of the refrigerator oil composition of this embodiment more excellent, the content of the epoxy compound (B) in the refrigerator oil composition is preferably 1.8 mass% or more, more preferably 2.8 mass% or more, still more preferably 3.8 mass% or more with respect to the total amount of the refrigerator oil composition.

In addition, from the viewpoint of easily securing the heat stability of the refrigerator oil composition with an appropriate addition amount, the content is preferably 15 mass% or less, more preferably 12 mass% or less, still more preferably 10 mass% or less.

The upper limit values and lower limit values of those numerical ranges may be arbitrarily combined. Specifically, the content is preferably from 1.8 mass% to 15 mass%, more preferably from 2.8 mass% to 12 mass%, still more preferably from 3.8 mass% to 10 mass%.

### <Content of Component (C)>

From the viewpoint of easily making the heat stability of the refrigerator oil composition of this embodiment more excellent, the content of the terpene compound (C) in the refrigerator oil composition is preferably 0.4 mass% or more, more preferably 1.2 mass% or more, still more preferably 1.8 mass% or more with respect to the total amount of the refrigerator oil composition.

In addition, from the viewpoint of easily securing the heat stability of the refrigerator oil composition with an appropriate addition amount, the content is preferably 10 mass% or less, more preferably 8.0 mass% or less, still more preferably 7.0 mass%.

The upper limit values and lower limit values of those numerical ranges may be arbitrarily combined. Specifically, the content is preferably from 0.4 mass% to 10 mass%, more preferably from 1.2 mass% to 8.0 mass%, still more preferably from 1.8 mass% to 7.0 mass%.

### <Mass Ratio of Component (B) to Component (C)>

From the viewpoint of easily making the heat stability of the refrigerator oil composition of this embodiment more excellent, the mass ratio [(B)/(C)] of the epoxy compound (B) to the terpene compound (C) in the refrigerator oil composition is preferably from 0.5 to 10, more preferably from 0.8 to 7.0, still more preferably from 1.0 to 5.0.

### <Additive>

The refrigerator oil composition of this embodiment may further include an additive (hereinafter also referred to as "other additive").

From the viewpoint of improving the stability of the refrigerator oil composition, the composition preferably includes, as the other additive, one or more kinds selected from the group consisting of: an antioxidant; an extreme-pressure agent; an oiliness improver; a copper deactivator; a rust inhibitor; an antifoaming agent; and a viscosity index improver, and more preferably includes at least an antioxidant, an extreme-pressure agent, and an antifoaming agent.

The total content of the other additives is preferably from 0 mass% to 10 mass%, more preferably from 0.01 mass% to 8.0 mass%, still more preferably from 0.1 mass% to 5.0 mass%, still further more preferably from 0.5 mass% to 3.0 mass% with respect to the total amount of the refrigerator oil composition.

### (Antioxidant)

The antioxidant is preferably one or more kinds selected from the group consisting of: a phenol-based antioxidant; and an amine-based antioxidant.

Examples of the phenol-based antioxidant include 2,6-di-tert-butyl-p-cresol (DBPC), 2,6-di-tert-butyl-4-ethylphenol, and 2,2'-methylenebis(4-methyl-6-tert-butylphenol).

Examples of the amine-based antioxidant include phenyl-α-naphthylamine and N,N'-diphenyl-p-phenylenediamine.

Among them, 2,6-di-tert-butyl-p-cresol (DBPC) is preferred.

### (Extreme-pressure Agent)

Examples of the extreme-pressure agent include a phosphorus-based extreme-pressure agent, a carboxylic acid metal salt, and a sulfur-based extreme-pressure agent.

Examples of the phosphorus-based extreme-pressure agent include phosphoric acid esters, acidic phosphoric acid esters, phosphorous acid esters, acidic phosphorous acid esters, and amine salts thereof. Specific examples thereof include tricresyl phosphate (TCP), triphenyl phosphate, tri(nonylphenyl) phosphite, dioleyl hydrogen phosphite, and 2-ethylhexyl diphenyl phosphite.

Examples of the carboxylic acid metal salt include metal salts of carboxylic acids each having 3 to 60 (preferably 3 to 30) carbon atoms. Among them, one or more kinds selected from the group consisting of metal salts of fatty acids each having 12 to 30 carbon atoms and dicarboxylic acids each having 3 to 30 carbon atoms are preferred. Alkali metals and alkaline earth metals are each preferred as a metal for forming the metal salt, and the alkali metals are more preferred.

Examples of the sulfur-based extreme-pressure agent include sulfurized oils and fats, sulfurized fatty acids, sulfurized esters, sulfurized olefins, dihydrocarbyl polysulfides, thiocarbamates, thioterpenes, and dialkyl thiodipropionates.

Among them, tricresyl phosphate (TCP) is preferred.

### (Oiliness Improver)

Examples of the oiliness improver include: aliphatic saturated or unsaturated monocarboxylic acids, such as stearic acid and oleic acid; polymerized fatty acids, such as dimer acids and hydrogenated dimer acids; hydroxy fatty acids, such as ricinoleic acid and 12-hydroxystearic acid; aliphatic saturated or unsaturated monoalcohols, such as lauryl alcohol and oleyl alcohol; aliphatic saturated or unsaturated monoamines, such as stearylamine and oleylamine; aliphatic saturated or unsaturated monocarboxylic acid amides, such as lauric acid amide and oleic acid amide; and partial esters of polyhydric alcohols, such as glycerin and sorbitol, and aliphatic saturated or unsaturated monocarboxylic acids.

### (Copper Deactivator)

An example of the copper deactivator is an N-[N,N'-dialkyl (alkyl group having 3 to 12 carbon atoms) aminomethyl]triazole.

### (Rust Inhibitor)

Examples of the rust inhibitor include a metal sulfonate, an aliphatic amine, an organic phosphorous acid ester, an organic phosphoric acid ester, an organic sulfonic acid metal salt, an organic phosphoric acid metal salt, an alkenyl succinic acid ester, and a polyhydric alcohol ester.

### (Antifoaming Agent)

Examples of the antifoaming agent include silicone-based antifoaming agents, such as a silicone oil and a fluorinated silicone oil.

### (Viscosity Index Improver)

Examples of the viscosity index improver include polymethacrylate, polyisobutylene, an ethylene-propylene copolymer, and a styrene-diene hydrogenated copolymer.

### [Physical Properties of Refrigerator Oil Composition]

In this embodiment, the acid value of the refrigerator oil composition after an autoclave test described in Examples to be described later is preferably 0.20 mgKOH/g or less, more preferably 0.16 mgKOH/g or less, still more preferably 0.10 mgKOH/g or less, still further more preferably 0.05 mgKOH/g or less.

### [Method of producing Refrigerator Oil Composition]

A method of producing the above-mentioned refrigerator oil composition is not particularly limited.

For example, a method of producing a refrigerator oil composition according to an embodiment of the present invention is a method of producing a refrigerator oil composition to be used together with a refrigerant containing an unsaturated fluorinated compound having a carbon-carbon unsaturated bond, the unsaturated fluorinated compound being represented by the following general formula (I):

C₂FₚR₄₋ₚ··· (I)

wherein
in the general formula (I), Rs each independently represent a hydrogen atom, a chlorine atom, a bromine atom, or an iodine atom, and "p" represents an integer of from 1 to 3, the method including a step of mixing a base oil (A), an epoxy compound (B), and a terpene compound (C), wherein the epoxy compound (B) is an aliphatic epoxy compound (B1) or an alicyclic epoxy compound (B2), and wherein the total blending amount of the epoxy compound (B) and the terpene compound (C) is 4.0 mass% or more with respect to the total amount of the composition.

A method of mixing the above-mentioned respective components is not particularly limited, and an example thereof is a method including a step of blending the epoxy compound (B) and the terpene compound (C) into the base oil (A). The epoxy compound (B) and the terpene compound (C) may be blended into the base oil (A) simultaneously or separately. The same applies to any other component. Each component may be blended after being made into the form of a solution (dispersion) by adding a diluent oil or the like. After the blending of the respective components, it is preferred that the components be uniformly dispersed through stirring by a known method.

### [Applications of Refrigerator Oil Composition]

More specifically, the refrigerator oil composition of this embodiment is used in a refrigerator having a refrigeration cycle formed of a configuration including, as essential components, a compressor, a condenser, an expansion mechanism (e.g., an expansion valve), and an evaporator, or the compressor, the condenser, the expansion mechanism, a dryer, and the evaporator. The refrigerator oil composition of this embodiment is preferably used for lubricating a sliding portion arranged in, for example, the compressor.

Accordingly, the present invention also provides a lubrication method including using the refrigerator oil composition of this embodiment in a lubrication portion in a refrigerator.

In addition, the refrigerator oil composition of this embodiment may be used in, for example, an air conditioner, a cold storage, a vending machine, a showcase, a refrigeration system, a hot water system, or a heating system.

Examples of the air conditioner include: a car air conditioner, such as an open car air conditioner or an electric car air conditioner; and a gas heat pump (GHP) air conditioner.

Herein, the refrigerator oil composition of this embodiment is particularly preferably used for, for example, equipment that performs only a cooling operation (e.g., a low-temperature warehouse).

### [Mixed Composition for Refrigerator]

A mixed composition for a refrigerator according to an embodiment of the present invention is a mixed composition for a refrigerator including a refrigerant and the refrigerator oil composition of this embodiment.

### <Refrigerant>

The refrigerator oil composition of this embodiment is used for a refrigerant containing an unsaturated fluorinated compound having a carbon-carbon unsaturated bond, the unsaturated fluorinated compound being represented by the following general formula (I):

C₂FₚR₄₋ₚ··· (I)

wherein
in the general formula (I), Rs each independently represent a hydrogen atom, a chlorine atom, a bromine atom, or an iodine atom, but a hydrogen atom is preferred from an environmental viewpoint. In addition, "p" represents an integer of from 1 to 3, preferably 2 or 3.

When a plurality of Rs are present, the plurality of Rs may be identical to or different from each other. However, in this embodiment, when a plurality of Rs are present, the plurality of Rs are preferably identical to each other.

The unsaturated fluorinated compounds (I) may be used alone or in combination thereof.

The unsaturated fluorinated compound (I) is a fluorine-containing ethylene-based compound having one carbon-carbon unsaturated bond and 1 to 3 (preferably 2 or 3) fluorine atoms.

From the viewpoint of making the refrigerant have a low global warming potential (GWP), the unsaturated fluorinated compound (I) is preferably one or more kinds selected from monofluoroethylene (R1141), 1,1,2-trifluoroethylene (R1123), 1,1-difluoroethylene (R1132a), cis-1,2-difluoroethylene (R1132(Z)), and trans-1,2-difluoroethylene (R1132(E)), more preferably one or more kinds selected from 1,1,2-trifluoroethylene (R1123), 1,1-difluoroethylene (R1132a), cis-1,2-difluoroethylene (R1132(Z)), and trans-1,2-difluoroethylene (R1132(E)), still more preferably trans-1,2-difluoroethylene (R1132(E)).

That is, the refrigerant to be used in the refrigerator oil composition of this embodiment preferably includes one or more kinds selected from monofluoroethylene (R1141), 1,1,2-trifluoroethylene (R1123), 1,1-difluoroethylene (R1132a), cis-1,2-difluoroethylene (R1132(Z)), and trans-1,2-difluoroethylene (R1132(E)), more preferably includes one or more kinds selected from 1,1,2-trifluoroethylene (R1123), 1,1-difluoroethylene (R1132a), cis-1,2-difluoroethylene (R1132(Z)), and trans-1,2-difluoroethylene (R1132(E)), and still more preferably includes trans-1,2-difluoroethylene (R1132(E)).

In addition, the refrigerator oil composition of this embodiment preferably further includes one or more kinds selected from the group consisting of: an unsaturated hydrofluorocarbon refrigerant having 3 or more carbon atoms; a saturated hydrofluorocarbon refrigerant; and a natural refrigerant together with the unsaturated fluorinated compound (I).

The respective refrigerants are described below.

### (Unsaturated Hydrofluorocarbon Refrigerant having 3 or more Carbon Atoms)

Examples of the unsaturated hydrofluorocarbon compound having 3 or more carbon atoms include compounds each having a carbon-carbon double bond, such as the fluorinated products of: a linear or branched chain olefin having 3 to 6 carbon atoms; and a cyclic olefin having 4 or more and 6 or less carbon atoms.

More specific examples thereof include: propene having introduced thereinto 1 to 5 fluorine atoms; butene having introduced thereinto 1 to 7 fluorine atoms; pentene having introduced thereinto 1 to 9 fluorine atoms; hexene having introduced thereinto 1 to 11 fluorine atoms; cyclobutene having introduced thereinto 1 to 5 fluorine atoms; cyclopentene having introduced thereinto 1 to 7 fluorine atoms; and cyclohexene having introduced thereinto 1 to 9 fluorine atoms.

Among those unsaturated hydrofluorocarbon compounds, a fluorinated product of propene is preferred, propene having introduced thereinto 3 to 5 fluorine atoms is more preferred, and propene having introduced thereinto 4 fluorine atoms is still more preferred. Specific examples of such preferred compound include 1,3,3,3-tetrafluoropropene (R1234ze), 1,2,3,3-tetrafluoropropene (R1234ye), and 2,3,3,3-tetrafluoropropene (R1234yf).

Among them, 2,3,3,3-tetrafluoropropene (R1234yf) is preferred.

### (Saturated Hydrofluorocarbon Refrigerant)

The saturated hydrofluorocarbon compound is preferably a fluorinated product of an alkane having 1 to 4 carbon atoms, more preferably a fluorinated product of an alkane having 1 to 3 carbon atoms, still more preferably a fluorinated product of an alkane having 1 or 2 carbon atoms (methane or ethane). Examples of the fluorinated product of methane or ethane include trifluoromethane (R23), difluoromethane (R32), 1,1-difluoroethane (R152a), 1,1,1-trifluoroethane (R143a), 1,1,2-trifluoroethane (R143), 1,1,1,2-tetrafluoroethane (R134a), 1,1,2,2-tetrafluoroethane (R134), and 1,1,1,2,2-pentafluoroethane (R125).

Among them, one or more kinds selected from the group consisting of: difluoromethane (R32); and 1,1-difluoroethane (R152a) are preferred.

### (Natural Refrigerant)

The natural refrigerant is, for example, one or more kinds selected from the group consisting of: a hydrocarbon-based refrigerant (HC); carbon dioxide (CO₂); and ammonia, and is preferably a hydrocarbon-based refrigerant.

The hydrocarbon-based refrigerant is preferably a hydrocarbon having 1 to 8 carbon atoms, more preferably a hydrocarbon having 1 to 5 carbon atoms, still more preferably a hydrocarbon having 3 to 5 carbon atoms. A refrigerant having 8 or less carbon atoms is preferred as a refrigerant because the boiling point of the refrigerant does not become excessively high. Examples of the hydrocarbon-based refrigerant include methane, ethane, ethylene, propane (R290), cyclopropane, propylene, n-butane, isobutane (R600a), 2-methylbutane, n-pentane, neopentane, cyclopentane, and normal butane.

The hydrocarbon-based refrigerants may be used alone or in combination thereof.

### (Preferred Aspect of Refrigerant)

In the refrigerant to be used in the refrigerator oil composition of this embodiment, the content of the unsaturated fluorinated compound (I) (preferably R1132(E)) is preferably from 1 mass% to 100 mass%, more preferably from 5 mass% to 50 mass%, still more preferably from 10 mass% to 30 mass% with respect to the total amount of the refrigerant.

Herein, when the refrigerant to be used in the refrigerator oil composition of this embodiment includes any other refrigerant except the unsaturated fluorinated compound (I), the other refrigerant is preferably one or more kinds selected from the group consisting of: an unsaturated hydrofluorocarbon refrigerant having 3 or more carbon atoms; and a saturated hydrofluorocarbon refrigerant, more preferably an unsaturated hydrofluorocarbon refrigerant having 3 or more carbon atoms, or a saturated hydrofluorocarbon refrigerant, still more preferably an unsaturated hydrofluorocarbon refrigerant having 3 or more carbon atoms.

The unsaturated hydrofluorocarbon refrigerant having 3 or more carbon atoms is preferably one or more kinds selected from the group consisting of: 1,3,3,3-tetrafluoropropene (R1234ze); 1,2,3,3-tetrafluoropropene (R1234ye); and 2,3,3,3-tetrafluoropropene (R1234yf), more preferably 2,3,3,3-tetrafluoropropene (R1234yf).

A mixed refrigerant of R1132(E) and R1234yf is preferably, for example, R474A.

The saturated hydrofluorocarbon refrigerant is preferably one or more kinds selected from the group consisting of: trifluoromethane (R23); difluoromethane (R32); 1,1-difluoroethane (R152a); 1,1,1-trifluoroethane (R143a); 1,1,2-trifluoroethane (R143); 1,1,1,2-tetrafluoroethane (R134a); 1,1,2,2-tetrafluoroethane (R134); and 1,1,1,2,2-pentafluoroethane (R125), more preferably one or more kinds selected from the group consisting of: difluoromethane (R32); and 1,1-difluoroethane (R152a).

### (Mixing Ratio of Refrigerant and Refrigerator Oil Composition)

In the mixed composition for a refrigerator of this embodiment, the mixing ratio [refrigerator oil composition/refrigerant] of the refrigerator oil composition to the refrigerant is preferably from 1/99 to 90/10, more preferably from 5/95 to 70/30 in terms of mass ratio. When the mixing ratio of the refrigerator oil composition to the refrigerant falls within the ranges, lubrication properties and a suitable refrigeration capacity in a refrigerator can be obtained.

### [One Aspect of the Present Invention Provided]

According to one aspect of the present invention, the following items [1] to [12] are provided.
[1] A refrigerator oil composition to be used together with a refrigerant containing an unsaturated fluorinated compound having a carbon-carbon unsaturated bond, the unsaturated fluorinated compound being represented by the following general formula (I):

   C₂FₚR₄₋ₚ··· (I)

   wherein
   in the general formula (I), Rs each independently represent a hydrogen atom, a chlorine atom, a bromine atom, or an iodine atom, and "p" represents an integer of from 1 to 3,
   the refrigerator oil composition including: a base oil (A); an epoxy compound (B); and a terpene compound (C),
   wherein the epoxy compound (B) is an aliphatic epoxy compound (B1) or an alicyclic epoxy compound (B2), and
   wherein a total content of the epoxy compound (B) and the terpene compound (C) is 4.0 mass% or more with respect to a total amount of the refrigerator oil composition.
[2] The refrigerator oil composition according to the above-mentioned item [1], wherein, in the general formula (I), R represents a hydrogen atom.
[3] The refrigerator oil composition according to the above-mentioned item [1] or [2], wherein the refrigerant includes, as the unsaturated fluorinated compound, one or more kinds selected from the group consisting of: R1123; R1132a; R1132(Z); and R1132(E).
[4] The refrigerator oil composition according to any one of the above-mentioned items [1] to [3], wherein the refrigerant includes R1132(E) as the unsaturated fluorinated compound.
[5] The refrigerator oil composition according to any one of the above-mentioned items [1] to [4], wherein the refrigerant further includes one or more kinds selected from the group consisting of: an unsaturated hydrofluorocarbon refrigerant having 3 or more carbon atoms; a saturated hydrofluorocarbon refrigerant; and a natural refrigerant.
[6] The refrigerator oil composition according to any one of the above-mentioned items [1] to [5], wherein the aliphatic epoxy compound (B1) includes a compound having a glycidyl ether group.
[7] The refrigerator oil composition according to any one of the above-mentioned items [1] to [6], wherein the alicyclic epoxy compound (B2) includes a compound having a cyclohexane skeleton.
[8] The refrigerator oil composition according to any one of the above-mentioned items [1] to [7], wherein the terpene compound (C) includes one or more kinds selected from the group consisting of: a pinene compound; and a terpinene compound.
[9] The refrigerator oil composition according to any one of the above-mentioned items [1] to [8], wherein a content of the terpene compound (C) is 0.4 mass% or more with respect to the refrigerator oil composition.
[10] The refrigerator oil composition according to any one of the above-mentioned items [1] to [9], wherein a mass ratio [(B)/(C)] of the epoxy compound (B) to the terpene compound (C) is from 0.5 to 10.
[11] A mixed composition for a refrigerator, including:
   a refrigerant containing an unsaturated fluorinated compound having a carbon-carbon unsaturated bond, the unsaturated fluorinated compound being represented by the following general formula (I):

      C₂FₚR₄₋ₚ··· (I)
   wherein
   in the general formula (I), Rs each independently represent a hydrogen atom, a chlorine atom, a bromine atom, or an iodine atom, and "p" represents an integer of from 1 to 3; and
   the refrigerator oil composition according to any one of the above-mentioned items [1] to [10].
[12] A method of producing a refrigerator oil composition to be used together with a refrigerant containing an unsaturated fluorinated compound having a carbon-carbon unsaturated bond, the unsaturated fluorinated compound being represented by the following general formula (I):

   C₂FₚR₄₋ₚ··· (I)

   wherein
   in the general formula (I), Rs each independently represent a hydrogen atom, a chlorine atom, a bromine atom, or an iodine atom, and "p" represents an integer of from 1 to 3,
   the method including a step of mixing a base oil (A), an epoxy compound (B), and a terpene compound (C),
   wherein the epoxy compound (B) is an aliphatic epoxy compound (B1) or an alicyclic epoxy compound (B2), and
   wherein a total blending amount of the epoxy compound (B) and the terpene compound (C) is 4.0 mass% or more with respect to a total amount of the composition.

### Examples

The present invention is specifically described by way of Examples below. However, the present invention is not limited to Examples below.

### [Methods of measuring Various Physical Property Values]

The respective properties of the respective raw materials used in Examples and Comparative Examples were measured in accordance with the following procedures.

### (1) Kinematic Viscosity

A kinematic viscosity at 100°C was measured in conformity with JIS K2283:2000.

### [Details of Respective Components used for Preparation of Refrigerator Oil Composition]

### <Base Oil (A)>

·PVE 1: a copolymer of polyethyl vinyl ether and polyisobutyl vinyl ether (polyethyl vinyl ether:polyisobutyl vinyl ether=9:1 (molar ratio), 40°C kinematic viscosity=66.6 mm²/s)
·PVE 2: a copolymer of polyethyl vinyl ether and polyisobutyl vinyl ether (polyethyl vinyl ether:polyisobutyl vinyl ether=8:2 (molar ratio), 40°C kinematic viscosity=33.1 mm²/s)

### <Epoxy Compound (B)>

### (Aliphatic Epoxy Compound (B1))

·2-Ethylhexyl glycidyl ether

### (Alicyclic Epoxy Compound (B2))

·1,2-Epoxy-4-vinylcyclohexane

### <Terpene Compound (C)>

·β-Pinene
·γ-Terpinene

### <Other Additives>

·Antioxidant: 2,6-di-tert-butyl-p-cresol (DBPC)
·Extreme-pressure agent: tricresyl phosphate (TCP)
·Antifoaming agent: dimethyl silicone (100-fold diluted product in mineral oil)

### [Examples 1 to 13, Comparative Examples 1 to 5, and Reference Example 1]

Refrigerator oil compositions each having composition shown in Table 1 were prepared, and were each evaluated for its heat stability by a method to be described later. The evaluation results are shown in Table 1.

### <Evaluation: Heat Stability Test>

Fe, Cu, and Al were loaded as catalysts into an autoclave vessel (volume: 200 mL), and the vessel was filled with a mixture of 50 g of a refrigerator oil composition and 50 g of a refrigerant. In addition, a moisture content in the vessel was set to 50 ppm by mass or less, and an air pressure therein was set to 100 Torr (13.3 kPa). The mixture was held at 175°C for 21 days, and was then evaluated for its acid value (mgKOH/g).

The acid value was measured in conformity with JIS K2501:2003 by an indicator photometric titration method (see Annex 1 in the JIS standard).

In each of Examples 1 to 13 and Comparative Examples 1 to 5, the refrigerant used in the heat stability test was a mixed refrigerant (R474A) of R1132(E) and R1234yf (R1132(E):R1234yf=23:77 (mass ratio)).

In Reference Example 1, R1234yf was used alone.

### [Table 1]

**Table 1**

| | | | Example | | | | |
|---|---|---|---|---|---|---|---|
| | | | 1 | 2 | 3 | 4 | 5 |
| Refrigerator oil composition (unit: mass%) | Base oil (A) | PVE 1 | 35.00 | 30.00 | 66.00 | 35.00 | 35.00 |
| | | PVE 2 | 58.25 | 63.85 | 23.25 | 59.15 | 57.65 |
| | Aliphatic epoxy compound (B1) | 2-Ethylhexyl glycidyl ether | 4.00 | 2.00 | 8.00 | 4.00 | 4.00 |
| | Alicyclic epoxy compound (B2) | 1,2-Epoxy-4-vinylcyclohexane | | | | | |
| | Terpene compound (C) | β-Pinene | 1.40 | 2.80 | 1.40 | 0.50 | 2.00 |
| | | γ-Terpinene | - | - | - | - | - |
| | Other additives | Antioxidant | 0.30 | 0.30 | 0.30 | 0.30 | 0.30 |
| | | Extreme-pressure agent | 1.00 | 1.00 | 1.00 | 1.00 | 1.00 |
| | | Antifoaming agent | 0.05 | 0.05 | 0.05 | 0.05 | 0.05 |
| | Total | | 100.0 | 100.0 | 100.0 | 100.0 | 100.0 |
| | (B)+(C) | | 5.4 | 4.8 | 9.4 | 4.5 | 6.0 |
| | (B)/(C) | | 2.9 | 0.7 | 5.7 | 8.0 | 2.0 |
| Evaluation | | Acid value after autoclave test (unit: mgKOH/g) | 0.15 | 0.17 | 0.18 | 0.19 | 0.05 |

**Table 1 (continued)**

| | | | Example | | | | |
|---|---|---|---|---|---|---|---|
| | | | 6 | 7 | 8 | 9 | 10 |
| Refrigerator oil composition (unit: mass%) | Base oil (A) | PVE 1 | 66.00 | 66.00 | 70.00 | 35.00 | 35.00 |
| | | PVE 2 | 22.65 | 22.45 | 15.05 | 58.25 | 58.65 |
| | Aliphatic epoxy compound (B1) | 2-Ethylhexyl glycidyl ether | 8.00 | 6.00 | 8.00 | - | 2.00 |
| | Alicyclic epoxy compound (B2) | 1,2-Epoxy-4-vinylcyclohexane | - | - | - | 4.00 | - |
| | Terpene compound (C) | β-Pinene | 2.00 | 4.20 | 5.60 | 1.40 | - |
| | | γ-Terpinene | - | - | - | - | 3.00 |
| | Other additives | Antioxidant | 0.30 | 0.30 | 0.30 | 0.30 | 0.30 |
| | | Extreme-pressure agent | 1.00 | 1.00 | 1.00 | 1.00 | 1.00 |
| | | Antifoaming agent | 0.05 | 0.05 | 0.05 | 0.05 | 0.05 |
| | Total | | 100.0 | 100.0 | 100.0 | 100.0 | 100.0 |
| | (B)+(C) | | 10.0 | 10.2 | 13.6 | 5.4 | 5.0 |
| | (B)/(C) | | 4.0 | 1.4 | 1.4 | 2.9 | 0.7 |
| Evaluation | | Acid value after autoclave test (unit: mgKOH/g) | 0.03 | 0.05 | 0.03 | 0.13 | 0.14 |

**Table 1 (continued)**

| | | | Example | | | Comparative Example | |
|---|---|---|---|---|---|---|---|
| | | | 11 | 12 | 13 | 1 | 2 |
| Refrigerator oil composition (unit: mass%) | Base oil (A) | PVE 1 | 35.00 | 66.00 | 70.00 | 30.00 | 66.00 |
| | | PVE 2 | 57.65 | 22.65 | 15.05 | 64.65 | 24.65 |
| | Aliphatic epoxy compound (B1) | 2-Ethylhexyl glycidyl ether | 4.00 | 8.00 | 8.00 | 4.00 | 8.00 |
| | Alicyclic epoxy compound (B2) | 1,2-Epoxy-4-vinylcyclohexane | - | - | - | - | - |
| | Terpene compound (C) | β-Pinene | - | - | - | - | - |
| | | γ-Terpinene | 2.00 | 2.00 | 5.60 | - | - |
| | Other additives | Antioxidant | 0.30 | 0.30 | 0.30 | 0.30 | 0.30 |
| | | Extreme-pressure agent | 1.00 | 1.00 | 1.00 | 1.00 | 1.00 |
| | | Antifoaming agent | 0.05 | 0.05 | 0.05 | 0.05 | 0.05 |
| | Total | | 100.0 | 100.0 | 100.0 | 100.0 | 100.0 |
| | (B)+(C) | | 6.0 | 10.0 | 13.6 | 4.0 | 8.0 |
| | (B)/(C) | | 2.0 | 4.0 | 1.4 | - | - |
| Evaluation | | Acid value after autoclave test (unit: mgKOH/g) | 0.04 | 0.02 | 0.02 | 0.34 | 0.31 |

**Table 1 (continued)**

| | | | Comparative Example | | | Reference Example |
|---|---|---|---|---|---|---|
| | | | 3 | 4 | 5 | 1 |
| Refrigerator oil composition (unit: mass%) | Base oil (A) | PVE 1 | 25.00 | 25.00 | 25.00 | 25.00 |
| | | PVE 2 | 71.25 | 70.25 | 71.25 | 70.25 |
| | Aliphatic epoxy compound (B1) | 2-Ethylhexyl glycidyl ether | 1.00 | 2.00 | 1.00 | 2.00 |
| | Alicyclic epoxy compound (B2) | 1,2-Epoxy-4-vinylcyclohexane | | | | |
| | Terpene compound (C) | β-Pinene | 1.40 | 1.40 | - | 1.40 |
| | | γ-Terpinene | - | - | 1.40 | - |
| | Other additives | Antioxidant | 0.30 | 0.30 | 0.30 | 0.30 |
| | | Extreme-pressure agent | 1.00 | 1.00 | 1.00 | 1.00 |
| | | Antifoaming agent | 0.05 | 0.05 | 0.05 | 0.05 |
| | Total | | 100.0 | 100.0 | 100.0 | 100.0 |
| | (B)+(C) | | 2.4 | 3.4 | 2.4 | 3.4 |
| | (B)/(C) | | 0.7 | 1.4 | 0.7 | 1.4 |
| Evaluation | | Acid value after autoclave test (unit: mgKOH/g) | 0.35 | 0.30 | 0.29 | 0.05 |

The following can be seen from Table 1.

It is found that the refrigerator oil compositions of Examples 1 to 13 are each excellent in heat stability because the compositions each include the epoxy compound (B) and the terpene compound (C), and the total content of the epoxy compound (B) and the terpene compound (C) is 4.0 mass% or more.

In contrast, it is found that the refrigerator oil compositions of Comparative Examples 1 and 2 are each poor in heat stability because the compositions are each free of the terpene compound (C).

In addition, it is found that the refrigerator oil compositions of Comparative Examples 3 to 5 are each poor in heat stability because the compositions each include the epoxy compound (B) and the terpene compound (C), but the total content of the epoxy compound (B) and the terpene compound (C) is less than 4.0 mass%.

As described in Reference Example 1, in the case where R1234yf is used alone as a refrigerant, the heat stability is excellent even when the total content of the epoxy compound (B) and the terpene compound (C) is less than 4.0 mass%. Meanwhile, in the refrigerator oil composition of Comparative Example 4, which has the same formulation as that in Reference Example 1, the mixed refrigerant of R1132(E) and R1234yf is used as a refrigerant, and it is found that in this case, the heat stability is poor. From those facts, it is found that the incorporation of R1132(E) into the refrigerant makes it difficult to secure the heat stability of the refrigerator oil composition, and it is found that the refrigerator oil compositions of Examples 1 to 13 are each excellent in heat stability under such difficulty.

## Claims

1. A refrigerator oil composition to be used together with a refrigerant comprising an unsaturated fluorinated compound having a carbon-carbon unsaturated bond, the unsaturated fluorinated compound being represented by the following general formula (I):
C₂FₚR₄₋ₚ··· (I)
wherein
in the general formula (I), Rs each independently represent a hydrogen atom, a chlorine atom, a bromine atom, or an iodine atom, and "p" represents an integer of from 1 to 3,
the refrigerator oil composition comprising:
a base oil (A);
an epoxy compound (B); and
a terpene compound (C),
wherein the epoxy compound (B) is an aliphatic epoxy compound (B1) or an alicyclic epoxy compound (B2), and
wherein a total content of the epoxy compound (B) and the terpene compound (C) is 4.0 mass% or more with respect to a total amount of the refrigerator oil composition.

2. The refrigerator oil composition according to claim 1, wherein, in the general formula (I), R represents a hydrogen atom.

3. The refrigerator oil composition according to claim 1 or 2, wherein the refrigerant comprises, as the unsaturated fluorinated compound, one or more kinds selected from the group consisting of: R1123; R1132a; R1132(Z); and R1132(E).

4. The refrigerator oil composition according to any one of claims 1 to 3, wherein the refrigerant comprises R1132(E) as the unsaturated fluorinated compound.

5. The refrigerator oil composition according to any one of claims 1 to 4, wherein the refrigerant further comprises one or more kinds selected from the group consisting of: an unsaturated hydrofluorocarbon refrigerant having 3 or more carbon atoms; a saturated hydrofluorocarbon refrigerant; and a natural refrigerant.

6. The refrigerator oil composition according to any one of claims 1 to 5, wherein the aliphatic epoxy compound (B1) comprises a compound having a glycidyl ether group.

7. The refrigerator oil composition according to any one of claims 1 to 6, wherein the alicyclic epoxy compound (B2) comprises a compound having a cyclohexane skeleton.

8. The refrigerator oil composition according to any one of claims 1 to 7, wherein the terpene compound (C) comprises one or more kinds selected from the group consisting of: a pinene compound; and a terpinene compound.

9. The refrigerator oil composition according to any one of claims 1 to 8, wherein a content of the terpene compound (C) is 0.4 mass% or more with respect to the refrigerator oil composition.

10. The refrigerator oil composition according to any one of claims 1 to 9, wherein a mass ratio [(B)/(C)] of the epoxy compound (B) to the terpene compound (C) is from 0.5 to 10.

11. A mixed composition for a refrigerator, comprising:
a refrigerant comprising an unsaturated fluorinated compound having a carbon-carbon unsaturated bond, the unsaturated fluorinated compound being represented by the following general formula (I):
C₂FₚR₄₋ₚ··· (I)
wherein
in the general formula (I), Rs each independently represent a hydrogen atom, a chlorine atom, a bromine atom, or an iodine atom, and "p" represents an integer of from 1 to 3; and
the refrigerator oil composition of any one of claims 1 to 10.

12. A method of producing a refrigerator oil composition to be used together with a refrigerant comprising an unsaturated fluorinated compound having a carbon-carbon unsaturated bond, the unsaturated fluorinated compound being represented by the following general formula (I):
C₂FₚR₄₋ₚ··· (I)
wherein
in the general formula (I), Rs each independently represent a hydrogen atom, a chlorine atom, a bromine atom, or an iodine atom, and "p" represents an integer of from 1 to 3,
the method comprising a step of mixing a base oil (A), an epoxy compound (B), and a terpene compound (C),
wherein the epoxy compound (B) is an aliphatic epoxy compound (B1) or an alicyclic epoxy compound (B2), and
wherein a total blending amount of the epoxy compound (B) and the terpene compound (C) is 4.0 mass% or more with respect to a total amount of the composition.
